# EUROPÄISCHE PATENTSCHRIFT

(11) **EP 1 915 589 B1**
(45) Veröffentlichungstag und Bekanntmachung des Hinweises auf die Patenterteilung: **24.12.2008**
(21) Anmeldenummer: 06761796.9
(22) Anmeldetag: 13.07.2006
(51) Int. Cl.: G01C 22/00, B62J 39/00

(54) **VORRICHTUNG ZUR EINSTELLUNG DER RADGRÖSSE EINES FAHRRADES AN EINEM FAHRRADCOMPUTER**
APPARATUS FOR SETTING THE WHEEL SIZE OF A BICYCLE ON A BICYCLE COMPUTER
DISPOSITIF PERMETTANT DE REGLER LA GRANDEUR DE LA ROUE D'UNE BICYCLETTE DANS UN ORDINATEUR POUR BICYCLETTE

(30) Priorität: 19.08.2005 DE 102005039615
(43) Veröffentlichungstag der Anmeldung: 30.04.2008
(73) Patentinhaber: Sigma Elektro GmbH, 67433 Neustadt/ Weinstrasse (DE)
(72) Erfinder: SCHENDEL, Klaus, 67433 Neustadt/Weinstrasse (DE)
(74) Vertreter: Wüstefeld, Regine Marie
(86) Internationale Anmeldenummer: PCT/DE2006/001210
(87) Internationale Veröffentlichungsnummer: WO 2007/022739

(56) Entgegenhaltungen:
- DE-A1- 3 446 689
- DE-C1- 19 748 167

## Beschreibung

Die vorliegende Erfindung betrifft eine Vorrichtung zum Einstellen der Radgröße eines Fahrrades an einem Fahrradcomputer mit einem Eingabemittel am Fahrradcomputer.

Es ist üblich, dass Radfahrer mehr als ein Rad besitzen. Mindestens zwei unterschiedliche Fahrradtypen kommen zum Einsatz - einerseits für das Fahren auf der Straße, andererseits für das Fahren im Gelände. Fahrradcomputer, die meist am Lenkrad des Fahrrades angeordnet sind, sind aus der Praxis bekannt. Es werden Leistungsdaten aufgenommen, berechnet und angezeigt. Die Information des Sportlers über seine erbrachte Leistung, insbesondere die zurückgelegte Wegstrecke, die Geschwindigkeit, gehört heute zum Standart - auch bei Freizeitsportlern.

Am Lenkrad des Fahrrades befindet sich üblicherweise ein Aufnahmebauteil für den Fahrradcomputer, der dort lösbar festgelegt wird. Ein auf die korrekte Radgröße eingestellter Fahrradcomputer kann nun die Impulse des an den Radspeichen angeordneten Impulsgebers empfangen und die gewünschten Daten berechnen und anzeigen.

Möchte der Radfahrer nun das Fahrrad wechseln, ist es für ihn wichtig, seinen Fahrradcomputer auf dem aktuellen Rad zu installieren. Da die Räder verschiedene Radgrößen haben, muss der Radfahrer seinen Fahrradcomputer auf die aktuelle Radgröße einstellen. Aus der Praxis sind zwei grundsätzliche Methoden bekannt, die Einstellung vorzunehmen. Zum einen kann ein Eingabemittel in Form eines Umstellknopfes manuell betätigt werden, der eine Einstellung innerhalb der Datenverarbeitungsanlage des Fahrradcomputers auf die dort gespeicherte Radgröße bewirkt. Zum anderen kann über die Menütasten des Fahrradcomputers eine Programmierung durchgeführt werden. Die Programmierung von Fahrradcomputern ist aufgrund der kleinen Baugröße schwierig und oftmals nur unter Benutzung eines spitzen Gegenstandes zum Drücken eines innerhalb des

Gehäuses versenkten Kontaktstiftes zu erreichen. Die meist umfangreiche Betriebsanleitung hält den Radfahrer auf. Beim Betätigen des vorgenannten Umstellknopfes fehlt die Kontrollmöglichkeit, ob ausreichend stark gedrückt wurde oder ob aus Versehen zwei Mal gedrückt wurde. Manueller und zeitlicher Aufwand sowie Fehlerhäufigkeit bei den üblichen Einstellmitteln sind hoch. Für den leistungsbewussten Radfahrer ist es ärgerlich, wenn verfälschte Daten zu einem falschen Leistungsprofil führen.

Ausgehend von dem aus der Praxis bekannten Stand der Technik liegt der Erfindung die Aufgabe zugrunde, eine Vorrichtung der in Rede stehenden Art anzugeben, wobei der Fahrradcomputer einfach und sicher, nahezu automatisch, auf die richtige Radgröße einstellbar ist.

Die voranstehende Aufgabe wird durch die Merkmale des Patentanspruches 1 gelöst. Danach ist eine Vorrichtung der in Rede stehenden Art derart ausgestaltet und weitergebildet, dass der Fahrradcomputer mindestens zwei Eingabemittel für mindestens zwei Radgrößen aufweist, dass ein dem Fahrrad zuordenbares Übertragungsmittel zur Übertragung der Radgröße des Fahrrades vorgesehen ist und dass das Übertragungsmittel ausschließlich mit dem Eingabemittel des Fahrradcomputers zusammenwirkt, das der Radgröße des Fahrrades entspricht.

Erfindungsgemäß ist erkannt worden, dass die Einstellung auf die richtige Radgröße des aktuell ausgewählten Fahrrades vereinfacht werden kann, wenn der Fahrradcomputer mehrere Eingabemittel für verschiedene Radgrößen entsprechend der Anzahl der Fahrräder aufweist. So steht für jede spezielle Radgröße des jeweiligen Fahrrades ein Eingabemittel zur Verfügung, das mit dem fahrrad- bzw. radgrößenspezifischen Übertragungsmittel zusammenwirken kann. Durch die Abstimmung des radgrößenspezifischen Eingabemittels und des radgrößenspezifischen Übertragungsmittels aufeinander, muss der Radfahrer selbst keine Auswahl mehr treffen, womit einerseits die Fehlerquelle beseitigt ist und andererseits die aufwendige Benutzung des Menüs des Fahrradcomputers vermieden wird. Es kommt in erfindungsgemäßer Weise zu einer sicheren und einfachen Einstellung des Fahrradcomputers.

Gemäß einer einfachen und robusten Ausführungsform könnten die Eingabemittel in Form von elektrisch leitenden Kontakten ausgebildet sein, von denen jeweils eines mit dem entsprechenden, ebenfalls als elektrisch leitender Kontakt vorliegenden Übertragungsmittel zusammenwirkt. Die Eingabemittel könnten voneinander beabstandet sein, so dass eine räumliche Trennung die Spezifizierung gerade im Hinblick auf mechanischen Kontakt unterstützt.

Das Übertragungsmittel könnte Bestandteil eines für sich bekannten Aufnahmebauteils für den Fahrradcomputer sein. Bei der elektrisch leitende Kontakte betreffenden Ausgestaltung der erfindungsgemäßen Vorrichtung kommen metallische Flächen- und/oder Steckkontakte in Betracht. Im Hinblick auf die bequeme Handhabbarkeit und eine geringe Verletzungsgefahr, werden wenig auskragende Kontakte bevorzugt. Gemäß einer konstruktiv vorteilhaften Ausgestaltung könnte das Übertragungsmittel in Form eines Flächenkontakts vorliegen, während das Eingabemittel als federnd gelagerter Kontaktstift ausgebildet ist. Der federnd gelagerte Kontaktstift könnte am freien Ende abgerundet sein und nur geringfügig von der Gehäusewandung des Fahrradcomputers abragen.

Das radspezifische Eingabemittel und das Übertragungsmittel kommen während der Anordnung des Fahrradcomputers am Aufnahmebauteil in eine deckungsgleiche Position, so dass über eine elektrische Verbindung die Radgröße im Fahrradcomputer entsprechend der Vorgabe durch das Übertragungsmittel einstellbar ist. Dabei kann dem Übertragungsmittel einerseits die Funktion zukommen, dass es das radgrößenmäßig bereits festgelegte Eingabemittel initialisiert bzw. die Einstellung lediglich durch die Betätigung des Eingabemittels auslöst. Bei dieser Variante sind die in Frage kommenden Radgrößen im Fahrradcomputer bereits hinterlegt. Andererseits besteht auch die Möglichkeit, dass eine Datenübertragung ausgehend von einer im Aufnahmeteil enthaltenen Elektronik stattfindet. Durch die letztgenannte Möglichkeit werden auch Fremdfahrräder nutzbar, deren Radgröße im Fahrradcomputer nicht hinterlegt sind.

Eine einfache bauliche Variante zur Erzielung der Deckungsgleichheit bzw. zur Herstellung des elektrischen Kontaktes zwischen Eingabemittel und Übertragungsmittel sieht vor, die Eingabemittel des Fahrradcomputers an dessen Unterseite und das Übertragungsmittel des Aufnahmebauteils an dessen Oberseite anzuordnen. Im montierten Zustand ist dann die Unterseite des Fahrradcomputers der Oberseite des Aufnahmebauteils zugewandt und die Kontakte gelangen in elektrische Verbindung.

Im Vergleich der Anordnung eines Übertragungsmittels eines ersten Aufnahmebauteils eines ersten Fahrrades mit der Anordnung des Übertragungsmittels eines zweiten Aufnahmebauteils eines zweiten Fahrrades ist in vorteilhafter, erfindungswesentlicher Weise ein Abstand vorgesehen, der dem Abstand zwischen zwei Eingabemitteln am Fahrradcomputer entspricht. Der Grundgedanke, mehrere Eingabemittel vorzusehen, die mit einem Übertragungsmittel zusammenwirken wird mechanisch dadurch verwirklicht, dass Übertragungsmittel verschiedener Fahrräder so positioniert sind, dass sie ausschließlich mit einem einzigen Eingabemittel des Fahrradcomputers zusammenwirken können. Eine Verwechslung wird ausgeschlossen, da bereits bei der Anordnung des Fahrradcomputers am Aufnahmebauteil die Stellung des radgrößenspezifischen Eingabemittels zum Übertragungsmittel festgelegt ist.

Alternativ könnte auch berührungslose Technik mittels Signalübertragung zwischen dem als Sender vorliegenden Datenübertragungsmittel und einem entsprechenden Empfänger des Fahrradcomputers zum Einsatz kommen. Dabei könnten die verschiedenen Eingabemittel des Fahrradcomputers als verschiedene Empfängerfrequenzen vorliegen, die auf das jeweilige Radgrößensignal des jeweiligen Übertragungsmittels des jeweiligen Fahrrades reagieren. In vorteilhafter Weise kann auch bei der Sender-Empfängerfrequenz-Variante auf die konstruktiven Möglichkeiten der Zuordnung zu einem Aufnahmebauteil am Fahrrad und dem Fahrradcomputer zurückgegriffen werden. Da verschiedene Empfängerfrequenzen etwas aufwendig zu realisieren sind, könnten die Eingabemittel auch derart gestaltet sein, dass eine einzige Empfangsfrequenz vorgesehen ist, die aber in der Lage ist, verschiedenen Codierungen zu erkennen, so dass auf diese Weise die korrekte Radgröße eingestellt wird.

Damit nun der Fahrradcomputer in geeigneter Position mit dem Aufnahmebauteil korrespondieren kann, könnte das Aufnahmebauteil eine Ausnehmung zur Aufnahme des Fahrradcomputers aufweisen. Zwischen der Ausnehmung des Aufnahmebauteils und einem von der Unterseite abragenden Eingriffteil des Fahrradcomputers könnte eine lösbare Verbindung ausbildbar sein. Beispielsweise könnte das Eingriffteil ein Außengewinde und die Ausnehmung ein Innengewinde aufweisen, aber auch bajonettartige Verriegelungen sind möglich. Bei der vorliegenden Ausführungsform könnten die Eingabemittel außerhalb des Bereichs des abragenden Eingriffteils des Fahrradcomputers, an der Unterseite angeordnet sein, während das Übertragungsmittel auf einem die Ausnehmung des Aufnahmebauteils umgebenden Randbereich angeordnet sein kann.

Im Hinblick auf die gewünschte Korrespondenz des Fahrradcomputers mit sämtlichen fahrradspezifischen und personenbezogenen oder auch die Umgebung betreffende Daten, bspw. die Herzfrequenz oder Höhenangaben, könnte das Aufnahmebauteil eine Datenverarbeitungseinrichtung umfassen, die in ihrem Speicher auch das Kriterium der Radgröße enthält. Dann wäre auch eine eigene Energiequelle für das Aufnahmebauteil denkbar.

Bei einer sehr einfachen Variante der erfindungsgemäßen Vorrichtung gelangt über das Übertragungsmittel einerseits die Eingabe der Radgröße, gleichzeitig aber auch die vom magnetischen Impulsgeber am Rad über einen Reedschalter in ein elektrisches Signal umgewandelte Impulsfrequenz zum Eingabemittel und damit zur Datenverarbeitungsanlage des Fahrradcomputers. Die erforderliche Energie kommt über einen Energieabgabekontakt des Fahrradcomputers zu einem Energieaufnahmekontakt des Aufnahmebauteils. Weitere Kontakte zwischen Fahrradcomputer und Aufnahmebauteil könnten auch die Trittfrequenz betreffen. Die erfindungsgemäße Vorrichtung zum Einstellen der Radgröße könnte demnach um etliche Funktionen erweitert werden.

Es gibt nun verschiedene Möglichkeiten, die Lehre der vorliegenden Erfindung in vorteilhafter Weise auszugestalten und weiterzubilden. Dazu ist einerseits auf die Patentansprüche, andererseits auf die nachfolgende Erläuterung eines Ausführungsbeispiels der Erfindung anhand der Zeichnung zu verweisen. In Verbindung mit der Erläuterung des angeführten Ausführungsbeispiels der Erfindung anhand der Zeichnung werden im allgemeinen bevorzugte Ausgestaltungen und Weiterbildungen der Lehre erläutert. In der Zeichnung zeigen
- Fig. 1: in prinzipieller Schemaskizze eine allgemeine Darstellung der erfindungsgemäßen Vorrichtung und
- Fig. 2: in schematischer Darstellung, ein Ausführungsbeispiel der erfindungsgemäßen Vorrichtung.

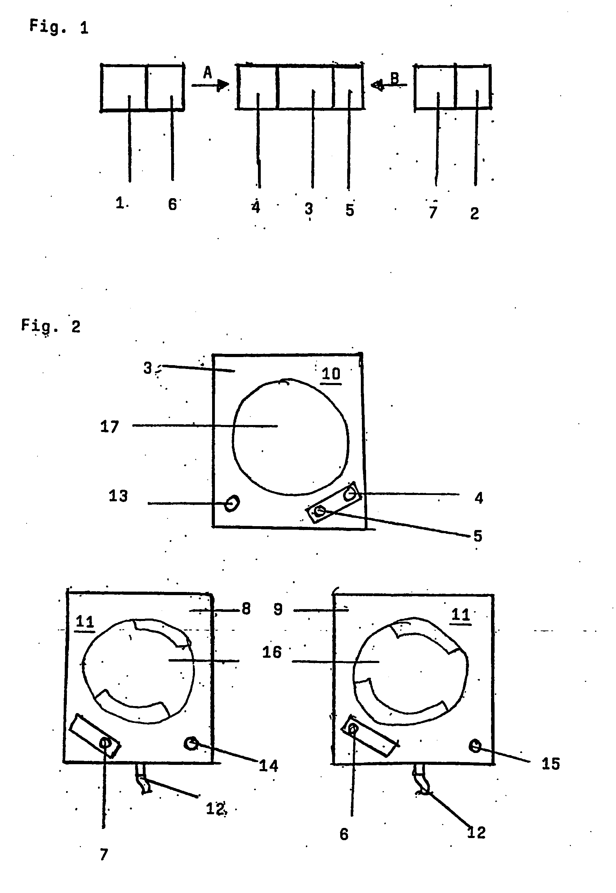

Die Fig. 1 zeigt in prinzipieller Schemaskizze eine allgemeine Darstellung der erfindungsgemäßen Vorrichtung zum Einstellen der Radgröße eines Fahrrades 1, 2 an einem Fahrradcomputer 3.

Der Fahrradcomputer 3 weist zwei Eingabemittel 4, 5 für zwei Radgrößen entweder des Fahrrades 1 oder des Fahrrades 2 auf. Jedem Fahrrad 1, 2 ist ein Übertragungsmittel 6, 7 zur Übertragung der Radgröße des Fahrrades 1, 2 zugeordnet. Das Übertragungsmittel 6 wirkt dabei ausschließlich mit dem Eingabemittel 4 zusammen, was durch den Pfeil A verdeutlicht ist. Das Übertragungsmittel 7 wirkt dabei ausschließlich mit dem Eingabemittel 5 des Fahrradcomputers 3 zusammen, was durch den Pfeil B dargestellt ist. Jedes Eingabemittel 4, 5 steht für eine Radgröße des jeweiligen Fahrrades 1, 2. Der Wert der beiden Radgrößen ist im Fahrradcomputer 3 hinterlegt.

Aus Fig. 2 geht hervor, dass die Eingabemittel 4,5 gemäß dem hier beschriebenen Ausführungsbeispiel in Form von elektrisch leitenden Kontakten ausgebildet sind und voneinander beabstandet sind. Die Übertragungsmittel 6, 7 sind jeweils Bestandteil eines Aufnahrmebauteils, 8, 9 und liegen, ebenfalls als elektrisch leitender Kontakt vor. Das Aufnahmebauteil 8, 9 nimmt den Fahrradcomputer 3 auf.

Die Eingabemittel 4, 5 des Pahrradcomputers 3 sind an dessen Unterseite 10 angeordnet. Die Übertragungsmittel 6, 7 des Aufnahmebauteils 8, 9 sind an dessen Oberseite 11 angeordnet.

Während, der Anordnung des Fahrradcomputers 3 am Aufnahmebauteil 8, 9 liegt die Unterseite 10 des Fahrradcomputers 3 auf der Oberseite 11 des Aufnahmebauteils 8, 9 auf. Dabei sind das Übertragungsmittel 6 oder 7 des Aufnahmebauteils 8 oder 9 und das Eingabemittel 4 oder 5 des Fahrradcomputers 3 am Aufnahmebauteil 8, 9 deckungsgleich positioniert und wirken elektrisch zusammen, so dass die Radgröße am Fahrradcomputer 3 entsprechend der Vorgabe durch das Übertragungsmittel 6, 7 einstellbar ist.

Aus dem Vergleich der beiden Aufnahmebauteile 8 und 9, ergibt sich, dass das Übertragungsmittel 6 des ersten Aufnahmebauteils 9 des ersten Fahrrades 1 im Vergleich zu dem Übertragungsmittel 7 des zweiten Aufnahmebauteils 8 des zweiten Fahrrades 2 beabstandet zu diesem angeordnet ist, wobei der Abstand zwischen den Übertragungsmitteln 6, 7 des ersten und zweiten Aufnahmebauteils 8, 9 dem Abstand zwischen den zwei Eingabemitteln 4, 5 am Fahrradcomputer 3 entspricht.

Mit 12 ist ein Kabel nebst Anschluss am Aufnahmebauteil 8, 9 bezeichnet, durch das elektrischer Signale zum jeweiligen Übertragungsmittel 6, 7 gelangen. Die elektrischen Signale gehen von einem Reed-Schalter aus, der magnetische Impulse eines an der Radspeiche des Rades des Fahrrades 1 oder 2 befestigten magnetischen Impulsgebers umwandelt. Diese elektrischen Signale erreichen das Übertragungsmittel 6 oder 7 und betätigen das Eingabemittel 4 oder 5 was zur Einsteitung der korrekten Radgröße im Fahrradcomputer 3 führt. Gleichzeitig werden auch die Impulse übermittelt.

Zur Funktionstuchtigkeit der erfindungsgemäßen Vorrichtung ist Energiezuführung erforderlich. Dies erfolgt durch einen Energieabgabekontakt 13 des Fahrradcomputers 3 und einen Energieaufnahmekontakt 14, 15 des jeweiligen Aufnahmebauteils 8, 9. Auch hier wird während der Aufnahme des Fahrradcomputers im Aufnahmebauteil 8, 9 Deckungsgleichheit der Kontakte 13, 14 bzw. 13, 15 hergestellt.

Das Aufnahmebauteil 8, 9 weist eine Ausnehmung 16 zur Aufnahme eines abragenden Eingriffmittels 17 des Fahrradcomputers 3 auf. Zwischen der Ausnehmung 16 des Aufnahmebauteils 8, 9 und dem von der Unterseite 10 abragenden Eingriffteil 17 des Fahrradcomputers 3 ist eine lösbare Verbindung ausbildbar. Die Ausnehmung 16 haut nicht näher bezeichnete Vorkehrungen zur Ausbildung der Verbindung. Entsprechende Verbindungsmittel sind auch am Eingriffmittel 17 vorgesehen.

Die Eingabemittel 4, 5 sind außerhalb des Beriechs des abragenden Eingriffteils 17 angeordnet. Die Ausnehmung 16 des Aufnahmebauteils 8, 9 ist von einem nicht näher bezeichneten Randbereich umgeben, der das Übertragungsmittel 6, 7 enthält. An der der Unterseite 10 genenüberliegenden Oberseite des Fahrradcomputers 3 ist eine Anzeige vorgesehen.

Hinsichtlich weiterer, in den Figuren nicht gezeigter Merkmale wird auf den allgemeinen Teil der Beschreibung verwiesen.

Abschließend sei darauf hingewiesen, dass die erfindungsgemäße Lehre nicht auf das voranstehend erörterte Ausführungsbeispiel eingeschränkt ist.

### Bezugszeichenliste

| | |
|---|---|
| 1 | Fahrrad |
| 2 | Fahrrad |
| 3 | Fahrradcomputer |
| 4 | Eingabemittel |
| 5 | Eingabemittel |
| 6 | Übertragungsmittel |
| 7 | Übertragungsmittel |
| 8 | Aufnahmebauteil |
| 9 | Aufnahmebauteil |
| 10 | Unterseite von 3 |
| 11 | Oberseite von 8, 9 |
| 12 | Kabel |
| 13 | Energieabgabekontakt |
| 14 | Energieaufnahmekontakt |
| 15 | Energieaufnahmekontakt |
| 16 | Ausnehmung |
| 17 | Eingriffmittel |
| A | Pfeil |
| B | Pfeil |

## Patentansprüche

1. Vorrichtung zum Einstellen der Radgröße eines Fahrrades (1, 2) an einem Fahrradcomputer (3) mit einem Eingabemittel (4, 5) am Fahrradcomputer (3),
**dadurch gekennzeichnet,**
**dass** der Fahrradcomputer (3) mindestens zwei Eingabemittel (4, 5) für mindestens zwei Radgrößen aufweist,
**dass** ein dem Fahrrad (1, 2) zuordenbares Übertragungsmittel (6, 7) zur Übertragung der Radgröße des Fahrrades (1, 2) vorgesehen ist und
**dass** das Übertragungsmittel (6,7) ausschließlich mit dem Eingabemittel (4, 5) des Fahrradcomputers (3) zusammenwirkt, das der Radgröße des Fahrrades (3) entspricht.

2. Vorrichtung nach Anspruch 1, **dadurch gekennzeichnet, dass** die Eingabemittel (4, 5) in Form von elektrisch leitenden Kontakten, ausgebildet sind, die voneinander beabstandet sind.

3. Vorrichtung nach Anspruch 1 oder 2, **dadurch gekennzeichnet, dass** das Überträgungsmittel (6, 7) Bestandteil eines Aufnahmebauteils (8, 9) für den Fahrradcomputer (3) ist und vorzugsweise in Form eines elektrisch leitenden Kontaktes vorliegt.

4. Vorrichtung Anspruch 3, **dadurch gekennzeichnet, dass** das Übertragungsmittel (6, 7) des Aufnahmebauteils (8, 9) und ein Eingabemittel (4, 5) des Fahrradcomputers (3) während der Anordnung des Fahrradcomputers (3) am Aufnahmebauteil (4, 9) deckungsgleich positioniert sind und elektrisch zusammenwirken, so dass die Radgröße am Fahrradcomputer (3) entsprechend der Vorgabe durch das Übertragungsmittel (6, 7) einstellbar ist.

5. Vorrichtung nach Anspruch 3 oder 4, **dadurch gekennzeichnet, dass** die Eingabemittel (4, 5) des Fahrradcomputers (3) an der Unterseite (10) und das Übertragungsmittel (6,7) des Aufnahmebauteils (8,9) an der Oberseite (11) angeordnet sind.

6. Vorrichtung nach einem der Anspruchs 2 bis 5, **dadurch gekennzeichnet, dass** das Übertragungsmittel (6) eines ersten Aufnahmebauteils (9) eines ersten Fahrrades (1) im Vergleich zu dem Übertragungsmittel (7) eines zweiten Aufnahmebauteils (8) eines zweiten Fahrrades (2) beabstandet zu diesem angeordnet ist, wobei der Abstand zwischen den Übertragungsmitteln (6, 7) des ersten und zweiten Aufnahmebauteits (8, 9) dem Abstand zwischen zwei Eingabemitteln (4, 5) am Fahrradcomputer (3) entspricht.

7. Vorrichtung nach Anspruch 1, **dadurch gekennzeichnet, dass** das Übertragunsmittel als Sender vorliegt und das Radgrößensignal an das als Empfängerfrequenz eines Empfängers vorliegende Eingabemittel sendet.

8. Vorrichtung nach einem der Anspruch 7, **dadurch gekennzeichnet, dass** der Sender in einem dem Fahrrad zuordenbaren Aufnahmebauteil für den Fahrradcomputer angeordnet ist.

9. Vorrichtung nach einem der Ansprüche 3 bis 6 und nach Anspruch 8, **dadurch gekennzeichnet, dass** das Aufnahmebauteil (8, 9) eine Ausnehmung (16) zur Aufnahme des Fahrradcomputers (3) aufweist.

10. Vorrichtung nach Anspruch 9, **dadurch gekennzeichnet, dass** zwischen der Ausnehmung (16) des Aufnahmebauteils (8, 9) und einem von der Unterseite (10) abragenden Eingriffteil (17) des Fahrradcomputers (3) eine lösbare Verbindung ausbildbar ist.

11. Vorrichtung nach Anspruch 10, **dadurch gekennzeichnet, dass** an der Unterseite (10) des Fahrradcomputers (3), außerhalb des Bereichs des abragenden Eingriffteils (17), die Eingabermittel (4, 5) angeordnet sind.

12. Vorrichtung nach einem der Ansprüche 9 bis 11, **dadurch gekennzeichnet, dass** die Ausnehmung (16) des Aufnahmebauteils (8, 9) von einem Randbereich umgeben ist, der das Übertragungsmittel (6, 7) enthält.

13. Vorrichtung nach einem der Ansprüche 1 bis 12, **dadurch gekennzeichnet, dass** das Aufnahmebauteil eine Datenverarbeitungseinrichtung umfasst, die in ihrem Speicher zumindest das Kriterium der Radgröße enthält.

14. Vorrichtung nach einem der Ansprüche 3 bis 6 und 9 bis 13, **dadurch gekennzeichnet, dass** das Aufnahmebauteil (8, 9) einen Energieaufnahmekontakt (14) umfasst, der mit einem Energieabgabekontakt (13) des Fahrradcomputers (3) zusammenwirkt.

## Claims

1. A device for setting the wheel size of a bicycle (1, 2) on a bicycle computer (3) using an input medium (4, 5) on the bicycle computer (3),
**characterized in that**
the bicycle computer (3) has at least two input media (4, 5) for at least two wheel sizes,
a transmission medium (6, 7) assignable to the bicycle (1, 2) is provided for transmitting the wheel size of the bicycle (1, 2), and
the transmission medium (6, 7) works together exclusively with the input medium (4, 5) of the bicycle computer (3) which corresponds to the wheel size of the bicycle (1, 2).

2. The device according to Claim 1, **characterized in that** the input media (4, 5) are implemented in the form of electrically conductive contacts, which are spaced apart from one another.

3. The device according to Claim 1 or 2, **characterized in that** the transmission medium (6, 7) is a component of a receptacle component (8, 9) for the bicycle computer (3) and is preferably provided in the form of an electrically conductive contact.

4. The device according to Claim 3, **characterized in that** the transmission medium (6, 7) of the receptacle component (8, 9) and an input medium (4, 5) of the bicycle computer (3) are positioned congruently and work together electrically while the bicycle computer (3) is situated on the receptacle component (8, 9), so that the wheel size is settable on the bicycle computer (3) corresponding to the preset by the transmission medium (6, 7).

5. The device according to Claim 3 or 4, **characterized in that** the input media (4, 5) of the bicycle computer (3) are situated on the bottom side (10) and the transmission media (6, 7) of the receptacle component (8, 9) are situated on the top side (11).

6. The device according to one of Claims 2 through 5, **characterized in that** the transmission medium (6) of a first receptacle component (9) of a first bicycle (1) is situated at a distance in comparison to the transmission medium (7) of a second receptacle component (8) of a second bicycle (2), the distance between the transmission media (6, 7) of the first and second receptacle components (8, 9) corresponding to the distance between two input media (4, 5) on the bicycle computer (3).

7. The device according to Claim 1, **characterized in that** the transmission medium is provided as a transmitter and transmits the wheel size signal on the input medium, which is provided as a receiver frequency of a receiver.

8. The device according to Claim 7, **characterized in that** the transmitter is situated in a receptacle component for the bicycle computer assignable to the bicycle.

9. The device according to one of Claims 3 through 6 and according to Claim 8, **characterized in that** the receptacle component (8, 9) has a recess (16) for accommodating the bicycle computer (3).

10. The device according to Claim 9, **characterized in that** a removable connection may be implemented between the recess (16) of the receptacle component (8, 9) and an engagement part (17) projecting from the bottom side (10) of the bicycle computer (3).

11. The device according to Claim 10, **characterized in that** the input media (4, 5) are situated on the bottom side (10) of the bicycle computer (3), outside the area of the projecting engagement part (17).

12. The device according to one of Claims 9 through 11, **characterized in that** the recess (16) of the receptacle component (8, 9) is enclosed by an edge area, which contains the transmission medium (6, 7).

13. The device according to one of Claims 1 through 12, **characterized in that** the receptacle component comprises a data processing apparatus, which contains at least the criterion of the wheel size in its memory.

14. The device according to one of Claims 3 through 6 and 9 through 13, **characterized in that** the receptacle component (8, 9) has a power receiving contact (14), which works together with a power delivery contact (13) of the bicycle computer (3).

## Revendications

1. Dispositif permettant de régler la grandeur de roue d'une bicyclette (1, 2) sur un ordinateur de bicyclette (3) comportant un moyen de saisie (4, 5) sur l'ordinateur de bicyclette (3),
**caractérisé en ce que**
l'ordinateur de bicyclette (3) présente au moins deux moyens de saisie (4, 5) pour au moins deux grandeurs de roue,
**en ce que** un moyen de transmission (6, 7) affecté à la bicyclette (1, 2) est prévu afin de transmettre la grandeur de roue de la bicyclette (1, 2) et
**en ce que** le moyen de transmission (6, 7) coopère exclusivement avec le moyen de saisie (4, 5) de l'ordinateur de bicyclette (3), qui correspond à la grandeur de roue de la bicyclette (1, 2).

2. Dispositif selon la revendication 1, **caractérisé en ce que** les moyens de saisie (4, 5) sont configurés sous la forme de contacts électriquement conducteurs, qui sont espacés les uns des autres.

3. Dispositif selon la revendication 1 ou 2, **caractérisé en ce que** le moyen de transmission (6, 7) est une partie intégrante d'un ensemble de réception (8, 9) de l'ordinateur de bicyclette (3) et se présente sous la forme d'un contact électriquement conducteur.

4. Dispositif selon la revendication 3, **caractérisé en ce que** le moyen de transmission (6, 7) de l'ensemble de réception (8, 9) et un moyen de saisie (4, 5) de l'ordinateur de bicyclette (3) sont positionnés de façon coïncidente pendant la disposition de l'ordinateur de bicyclette (3) sur l'ensemble de réception (8, 9) et coopèrent électriquement, de telle sorte que la grandeur de roue puisse être réglée sur l'ordinateur de bicyclette (3) de manière à correspondre à la prescription par le moyen de transmission (6, 7).

5. Dispositif selon la revendication 3 ou 4, **caractérisé en ce que** les moyens de saisie (4, 5) de l'ordinateur de bicyclette (3) sont disposés sur le côté inférieur (10) et le moyen de transmission (6, 7) de l'ensemble de réception (8, 9) est disposé sur le côté supérieur (11).

6. Dispositif selon une des revendications 2 à 5, **caractérisé en ce que** le moyen de transmission (6) d'un premier ensemble de réception (9) d'une première bicyclette (1) est comparé au moyen de transmission (7) d'un deuxième ensemble de réception (8) d'une deuxième bicyclette (2) disposé en espacement par rapport à ce dernier, moyennant quoi l'espacement entre les moyens de transmission (6, 7) du premier et du deuxième ensemble de réception (8, 9) correspond à l'espacement entre deux moyens de saisie (4, 5) sur l'ordinateur de bicyclette (3).

7. Dispositif selon la revendication 1, **caractérisé en ce que** le moyen de transmission se présente comme un émetteur et émet le signal de grandeur de roue sur le moyen de saisie se présentant comme la fréquence de récepteur d'un récepteur.

8. Dispositif selon la revendication 7, **caractérisé en ce que** l'émetteur est disposé dans un ensemble de réception pouvant être affecté à la bicyclette de l'ordinateur de bicyclette.

9. Dispositif selon une des revendications 3 à 6 et selon la revendication 8, **caractérisé en ce que** l'ensemble de réception (8, 9) présente une cavité (16) faisant office de réceptacle de l'ordinateur de bicyclette (3).

10. Dispositif selon la revendication 9, **caractérisé en ce que** entre la cavité (16) de l'ensemble de réception (8, 9) et une pièce de mise en prise (17) dépassant du côté inférieur (10) de l'ordinateur de bicyclette (3), une liaison amovible est établie.

11. Dispositif selon la revendication 10, **caractérisé en ce que** les moyens de saisie (4, 5) sont disposés sur le côté inférieur (10) de l'ordinateur de bicyclette (3), à l'extérieur de la zone de la pièce de mise en prise (17) dépassant.

12. Dispositif selon une des revendications 9 à 11, **caractérisé en ce que** la cavité (16) de l'ensemble de réception (8, 9) est entourée par une zone de bord, qui contient le moyen de transmission (6, 7).

13. Dispositif selon une des revendications 1 à 12, **caractérisé en ce que** l'ensemble de réception comprend un dispositif de traitement de données, qui contient dans sa mémoire au moins le critère de la grandeur de roue.

14. Dispositif selon une des revendications 3 à 6 et 9 à 13, **caractérisé en ce que** l'ensemble de réception (8, 9) comprend un contact d'absorption d'énergie (14), qui coopère avec un contact de restitution d'énergie (13) de l'ordinateur de bicyclette (3).
